# EUROPEAN PATENT SPECIFICATION

(11) **EP 1 953 432 B1**
(45) Date of publication and mention of the grant of the patent: **12.04.2017**
(21) Application number: 08101201.5
(22) Date of filing: 01.02.2008
(51) Int. Cl.: F16K 15/14, F16K 17/02

(54) **Fluid control valve**
Flussregelventil
Valve de contrôle de fluide

(30) Priority: 05.02.2007 US 671335
(43) Date of publication of application: 06.08.2008
(73) Proprietor: Avesto Tech B.V., 7575BP Oldenzaal (NL)
(72) Inventor: Nijland, Peter Lodewijk Johannes, 7581 DE Losser (NL)
(74) Representative: Mink-Lindenburg, Charlotte Hildegard

(56) References cited:
- EP-A1- 0 618 108
- CH-A5- 640 327
- DE-B- 1 163 107
- FR-A1- 2 401 375
- US-A- 4 904 236

## Description

The present invention relates to a fluid control valve to be inserted in a valve housing, said valve comprising the valve housing and a sealing element having a sealing surface and projecting in radial direction for sealing one or more fluid openings in said valve housing, which sealing element is responsive to fluid pressure to open and close to control the fluid flow through the fluid openings.

A known example of a fluid control valve is an umbrella valve or an inverted umbrella valve. In (inverted) umbrella valve typically has an integral stem by which it is normally attached in a preloaded position of closure. A sealing element is attached to the stem and is deflectable in response to differential pressure to assume an open position permitting forward flow there past, once the differential pressure reaches a certain opening pressure. When the differential pressure acting in this direction is relieved or when the differential pressure acts in the opposite direction such as on the occurrence of a backward flow, the elastomeric (inverted) umbrella valve because of its preload assumes its normally closed position and so prevents further forward flow as well as flow in the reverse or backward direction with the preload then assisted by the back pressure.

A fluid control valve according to the preamble of claim 1 is known from DE 1163107 B.

It is an object of the invention to provide a fluid control valve as mentioned above having improved flow characteristics in the direction of forward flow while maintaining a fluid-tight seal right until opening as well as in the reverse or backward direction.

According to the present invention this object is achieved by the fluid control valve according to claim 1.

The technical measures of providing a recess on the surface of the sealing element of the valve allows the sealing end with the sealing surface to be lifted up higher from the seat of the valve housing thus allowing a larger flow when the differential pressure reaches the opening pressure and the fluid control valve assumes its open position. At the same time the sealing end may have a rather stable form, which provides a higher preload leading to a higher opening pressure while maintaining a larger flow. Amongst many other applications these characteristics render the fluid control valve according to the invention very suitable as a pressure relieve valve.

The height of the thickened part influences the value of the opening pressure of the fluid control valve. For each application a thickened part having a suitable height can be chosen.

According to the invention the recess is a groove forming an essentially closed loop.

Preferably the groove has a substantially annular shape.

In a more elaborate preferred embodiment the sealing element is provided with two or more grooves extending over the surface of the sealing element at a predetermined mutual distance between subsequent grooves. The sealing end is divided in sub-ends by the additional groove(s) that are movable relative to each other thus allowing the sealing end to deflect under fluid pressure while the sub-ends it selves have a rather stable form.

In an elegant embodiment the sealing element has a substantially disc shape.

These and other features and advantages of the invention will be more apparent with a discussion of preferred embodiments of the invention and reference to the associated drawings.

The invention will be explained in more detail with reference to the appended drawings, in which:
Fig. 1A shows an example of a fluid control valve not forming part of the present invention in closed position;
Fig. 1B shows the example of figure 1A in open position;
Fig. 2A shows an example of a fluid control valve not forming part of the present invention in closed position;
Fig. 2B shows the example of figure 2A in open position; and
Fig. 3A shows a preferred embodiment of a fluid control valve according to the invention in closed position;
Fig. 3B shows the preferred embodiment of figure 3A in open position; and
Fig. 4A shows a preferred embodiment of a fluid control valve according to the invention in closed position;
Fig. 4B shows the preferred embodiment of figure 4A in open position; and
Fig. 5A shows an example of a fluid control valve not forming part of the present invention in closed position;
Fig. 5B shows the example of figure 5A in open position; and
Fig. 6A shows a preferred embodiment of a fluid control valve according to the invention in closed position;
Fig. 6B shows the preferred embodiment of figure 6A in open position; and
Fig. 7A shows an example of a fluid control valve not forming part of the present invention in closed position;
Fig. 7B shows the example of figure 7A in open position; and
Fig. 8 shows a curve illustrating the improvement of the fluid control valve according to the invention over the prior art.

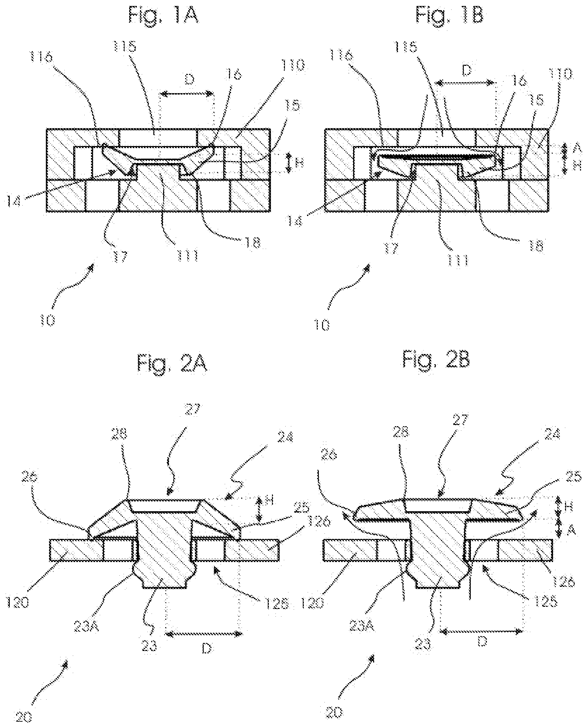

Fig. 1A shows a cross-sectional view of an example of a fluid control valve 10 in closed position. Fig. 1B shows a cross-sectional view of fluid control valve 10 in open position.

Fluid control valve 10 is to be inserted against a support 111 in a valve housing 110 that is schematically shown in part. Fluid control valve 10 controls the fluid flow through the valve housing 110. The direction of fluid flow is indicated by the arrows in figure 1B. In the example shown valve 10 comprises a valve body consisting of a sealing element 14 that projects in radial direction forming a sealing surface for sealing the fluid openings 115 that are present in valve housing 110. The sealing element is provided with at least one recess 17 located in the center of the surface of the sealing element 14. The sealing end 15 is present between the recess 17 and the periphery of the sealing element 14. The sealing surface is formed by the bottom surface of the sealing end 15 as seen in the direction of fluid flow. In the closed position shown the tip 16 of the sealing end 15 touches the seat 116 of the valve housing thereby sealing off the fluid openings 115.

In the example shown the recess 17 is located on the upper surface of the sealing element as seen in the direction of fluid flow. Typically the shape of the recess 17 will be in conformance with the shape of the outer circumference of the sealing element 14. Typically valve 10 has a disc or dish shaped sealing element and the recess 17 has a generally round shape.

Adjacent the recess 17 the sealing end 15 comprises a thickened part 18. The ratio of the height H of the thickened or bulging part 18 to the diameter D of the sealing disc is one of the design parameters to determine the opening pressure of the valve 10.

Once the pressure difference over the valve housing 110 is sufficiently high, the sealing element is forced to its open position shown in figure 1B. The sealing surface is lift of the seat 116 of the valve housing 110 allowing the fluid to flow through the fluid openings 115. The flow will be relatively large, since the distance A between the sealing surface and the seat is relatively large due to the recess 17.

Fig. 2A shows a cross-sectional view of an example of a fluid control valve 20 in closed position. Fig. 2B shows a cross-sectional view of fluid control valve 20 in open position.

Fluid control valve 20 is equal to fluid control valve 10 shown in figures 1A and 1 B provided with a stem 23. All reference numerals in figures 2A and 2B are incremented with 10 when compared to the reference numerals of figures 1A and 1B denoting equal parts.

In the example shown valve 20 is an umbrella valve. Umbrella valve 20 comprises a stem 23 for positioning the valve in a stem opening of the valve housing 120. The stem 23 is provided with a bulbous part 23A for securing the stem in the stem opening. A sealing element 24 is connected to one end of the stem 23. Sealing element 24 projects beyond the stem 23 in radial direction.

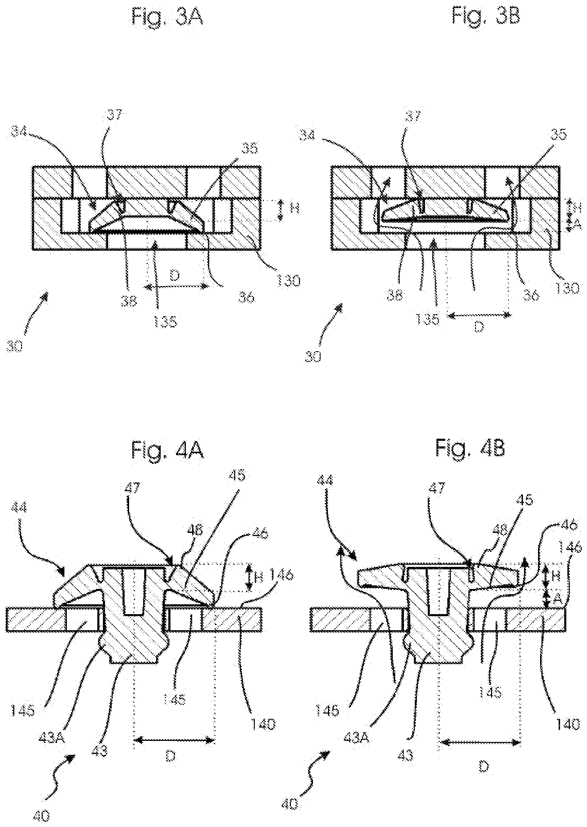

Fig. 3A shows a cross-sectional view of a preferred embodiment of a fluid control valve 30 according to the invention in closed position. Fig. 3B shows a cross-sectional view of fluid control valve 30 in open position.

Fluid control valve 30 is similar to fluid control valve 10 shown in figures 1A and 1B. The main difference resides in the fact that the recess is formed by a groove 37. All reference numerals in figures 3A and 3B are incremented with 20 when compared to the reference numerals of figures 1A and 1B denoting equal parts.

The sealing element 34 is provided with at least one groove 37 extending over the surface of the sealing element 34. The sealing end 35 is present between the groove 37 and the periphery of the sealing element 34.

In the embodiment shown the groove 37 is located on the upper surface of the sealing element as seen in the direction of fluid flow. Furthermore the groove 37 is located in the center of the sealing element 34. Typically valve 30 has a disc or dish shaped sealing element. Typically the shape of the groove 37 will be in conformance with the shape of the outer circumference of the sealing element 34. Typically valve 30 has a disc or dish shaped sealing element and the groove 37 has a generally annular shape.

Fig. 4A shows a cross-sectional view of a preferred embodiment of a fluid control valve 40 according to the invention in closed position. Fig. 4B shows a cross-sectional view of fluid control valve 40 in open position.

Fluid control valve 40 is equal to fluid control valve 30 shown in figures 3A and 3B provided with a stem 43. All reference numerals in figures 4A and 4B are incremented with 10 when compared to the reference numerals of figures 3A and 3B denoting equal parts.

In the preferred embodiment shown valve 40 is an umbrella valve. Umbrella valve 40 comprises a stem 43 for positioning the valve in a stem opening of the valve housing 140. The stem 43 is provided with a bulbous part 43A for securing the stem in the stem opening. A sealing element 44 is connected to one end of the stem 43. Sealing element 44 projects beyond the stem 43 in radial direction. Sealing element 44 projects beyond the stem 43 in radial direction forming a sealing surface for sealing the fluid openings 145 that are present in valve housing 140.

The sealing element is provided with at least one groove 47 extending over the surface of the sealing element 44. The sealing end 45 is present between the groove 47 and the periphery of the sealing element 44. The sealing surface is formed by the bottom surface of the sealing end 45 as seen in the direction of fluid flow. In the closed position shown the tip 46 of the sealing end 45 touches the seat 146 of the valve housing thereby sealing off the fluid openings 145.

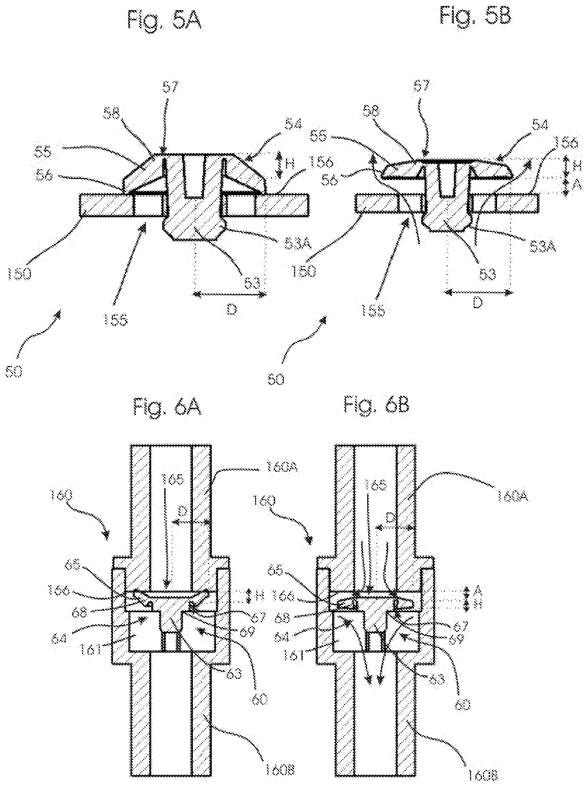

Fig. 5A shows a cross-sectional view of an example of a fluid control valve 50 according to the invention in closed position. Fig. 5B shows a cross-sectional view of fluid control valve 50 in open position.

Fluid control valve 50 is similar to fluid control valve 40 shown in figures 4A and 4B. The only difference can be found in the position of the groove 57 which extends on the bottom surface of the sealing element 54. All reference numerals in figures 5A and 5B are incremented with 10 when compared to the reference numerals of figures 4A and 4B denoting equal parts.

Fig. 6A shows a cross-sectional view of a preferred embodiment of a fluid control valve 60 according to the invention in closed position. Fig. 6B shows a cross-sectional view of fluid control valve 60 in open position.

Fluid control valve 60 is to be inserted in a valve housing 160 that is schematically shown in cross section. The valve housing 160 comprises two matching part 160A and 160B. Fluid control valve 60 controls the fluid flow in one direction through the valve housing 160. The direction of fluid flow is indicated by the arrows in figure 6B. In the preferred embodiment shown valve 60 is an inverted umbrella valve. Inverted umbrella valve 60 comprises a stem 63 for positioning the valve in a support 161 of the valve housing 160. The stem 63 is provided with a shoulder 69 abutting against the support 161. A sealing element 64 is connected to one end of the stem 63. Sealing element 64 projects beyond the stem 63 in radial direction forming a sealing surface for sealing the fluid openings 165 that are present in the seat 166 of the valve housing 160. The sealing element is provided with at least one groove 67 extending over the surface of the sealing element 64. The sealing end 65 is present between the groove 67 and the periphery of the sealing element 64. The sealing surface is formed by the bottom surface of the sealing end 65 as seen in the direction of fluid flow. In the closed position shown the tip of the sealing end 65 touches the seat 166 of the valve housing thereby sealing off the fluid openings 165.

In the embodiment shown the groove 67 is located on the upper surface of the sealing element as seen in the direction of fluid flow. Furthermore the groove 67 is located in the vicinity of the stem 63 even surrounding the stem 63. Typically an inverted umbrella valve has a disc shaped sealing element. Typically the shape of the groove 67 will be in conformance with the shape of the sealing element. In the case of a sealing disc the groove 67 has a generally annular shape.

Adjacent the groove 67 the sealing end 65 comprises a thickened part 68. The ratio of the height H of the thickened or bulging part 68 to the diameter D of the sealing disc determines the opening pressure of the valve 60.

Once the pressure difference over the compartments 160A and 160B of the valve housing 160 is sufficiently high, the sealing element is forced to its open position shown in figure 6B. The sealing surface is lift of the seat 166 of the valve housing 160 allowing the fluid to flow through the fluid openings 165. The flow will be relatively large, since the distance A between the sealing surface and the seat is relatively large due to the groove 67.

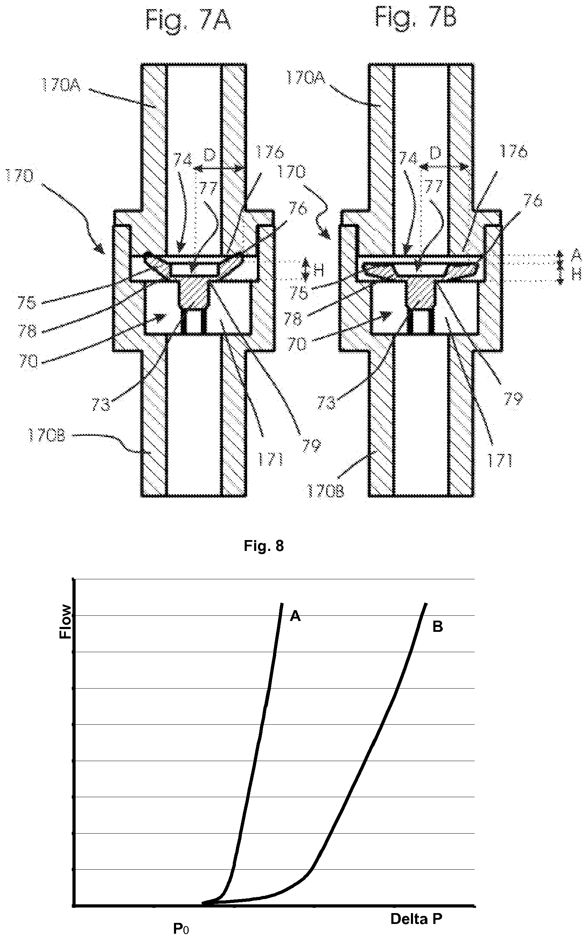

Fig. 7A shows a cross-sectional view of an example of a fluid control valve 70 according to the invention in closed position. Fig. 7B shows a cross-sectional view of fluid control valve 70 in open position.

Fluid control valve 70 is similar to fluid control valve 60 shown in figures 6A and 6B. Inverted umbrella valve 70 is provided with a recess 77. The recess is present at the bottom surface of the sealing element 74 as seen in the direction of fluid flow. All reference numerals in figures 7A and 7B are incremented with 10 when compared to the reference numerals of figures 6A and 6B denoting equal parts. The recess 77 has a similar shape and position as recess 17 in figures 1A, 1B and recess 27 in figures 2A, 2B.

Preferably the fluid control valve according to the invention is made of a suitable elastomeric material, such as thermoset or thermoplastic rubber.

Fig. 8 shows a diagram illustrating the improvement of the fluid control valve according to the invention over the prior art. The diagram illustrates the relation between the flow (on the vertical axis) and the differential pressure over the seat of the valve housing (on the horizontal axis). Line A shows this relation for a fluid control valve according to the invention. Line B shows this relation for a fluid control valve according to the prior art. Advantageously the fluid control valve according to the invention allows a greater flow at equal pressure. This is due to the presence of the recess. By removing material from the sealing element to shape the recess a flexible area is created that functions as a swivel point or hinge for the sealing end. The opening pressure Pₒ among others can be determined by choosing the ratio H/D.

In the preferred embodiments provided with a groove the effect of the groove may be enhanced by providing the sealing element with two or more grooves extending over the surface of the sealing element at a predetermined mutual distance between subsequent grooves. Preferably the grooves form closed loops surrounding each other.

It is noted that the preferred embodiments shown and described in the figures can be combined and that all these combinations fall within the scope of the present invention.

The fluid control valve according to the invention is in general suitable for controlling fluid flow through a valve housing and may be applied in all kinds of apparatus in various technical fields.

The invention is not therefore limited to the shown and described preferred embodiments, but extends generally to any embodiment which falls within the scope of the appended claims as seen in light of the foregoing description and drawings.

## Claims

1. Fluid control valve (30; 40; 60) to be inserted in a valve housing, said valve comprising the valve housing and a sealing element (34; 44; 64) having a sealing surface and projecting in radial direction for sealing one or more fluid openings in said valve housing, which sealing element is responsive to fluid pressure to open and close to control the fluid flow through the fluid openings, wherein the sealing element is provided with at least one recess (37; 47; 67), wherein the recess is a groove (37; 47; 67), preferably forming an essentially closed loop, such that at least one sealing end (35; 45; 65) is defined on the sealing element extending between the recess and the periphery of the sealing element, said sealing end carrying the sealing surface, said recess forming a flexible area that functions as a hinge for the sealing end, wherein the sealing end comprises a thickened part (38; 48; 68) located adjacent the recess, wherein the height (H) of the thickened part decreases towards the periphery of the sealing element and influences the value of the opening pressure of the fluid control valve, said opening pressure being larger than zero, **characterized in that** the groove (37; 47; 67) is located on the upper surface of the sealing element (34; 44; 64) opposite the sealing surface.

2. Fluid control valve according to claim 1, wherein the shape of the recess (37; 47; 67) is essentially in conformance with the shape of the outer circumference of the sealing element.

3. Fluid control valve according to claim 1 or 2, wherein the groove (37; 47; 67) has a substantially annular shape.

4. Fluid control valve according to one or more of the preceding claims, wherein the sealing element is provided with two or more recesses that are formed as grooves extending over the surface of the sealing element at a predetermined mutual distance.

5. Fluid control valve according to one or more of the preceding claims, wherein the sealing element (34; 44; 64) is substantially dish-shaped.

## Patentansprüche

1. Fluidsteuerventil (30; 40; 60), das in ein Ventilgehäuse eingeführt werden kann, wobei das Ventil das Ventilgehäuse und ein Dichtelement (34; 44; 64) umfasst, das eine Dichtfläche hat und das in radialer Richtung vorsteht zum Abdichten einer oder mehrerer Fluidöffnungen in dem Ventilgehäuse, wobei das Dichtelement in Abhängigkeit von dem Fluiddruck öffnet und schließt, um die Fluidströmung durch die Fluidöffnungen zu steuern, wobei das Dichtelement mit mindestens einer Ausnehmung (37; 47; 67) versehen ist, wobei die Ausnehmung eine Nut (37; 47; 67) ist, die vorzugsweise eine geschlossene Schleife beschreibt, so dass das mindestens eine Dichtungsende (35; 45; 65) definiert ist an dem Dichtelement, die sich erstreckt zwischen der Ausnehmung und dem Umfang des Dichtelementes, wobei das Dichtungsende die Dichtfläche trägt, wobei die Ausnehmung einen flexiblen Bereich ausbildet, der als Scharnier für das Dichtungsende dient, wobei das Dichtungsende einen verdickten Teil (38; 48; 68) aufweist, der benachbart zu der Aussparung angeordnet ist, wobei die Höhe (H) des verdickten Teils zu dem Umfang des Dichtelementes hin abnimmt und den Wert des Öffnungsdruckes des Fluidsteuerventils beeinflusst, wobei der Öffnungsdruck größer als Null ist, **dadurch gekennzeichnet, dass** die Ausnehmung (37; 47; 67) an der Oberseite des Dichtelementes (34; 44; 64) gegenüber der Dichtfläche angeordnet ist.

2. Fluidsteuerventil nach Anspruch 1, wobei die Form der Ausnehmung (37; 47; 67) im Wesentlichen mit der Form des äußeren Umfangs des Dichtelementes übereinstimmt.

3. Fluidsteuerventil nach Anspruch 1 oder 2, wobei die Nut (37; 47; 67) im Wesentlichen ringförmig ausgebildet ist.

4. Fluidsteuerventil nach einem oder mehreren der vorhergehenden Ansprüche, wobei das Dichtelement mit zwei oder mehreren Ausnehmungen versehen ist, die als Nuten ausgebildet sind, welche sich über die Oberfläche des Dichtelementes in einem vorherbestimmten Abstand voneinander erstrecken.

5. Fluidsteuerventil nach einem oder mehreren der vorhergehenden Ansprüche, wobei das Dichtelement (34; 44; 64) im Wesentlichen schalenförmig ausgebildet ist.

## Revendications

1. Valve de contrôle de fluide (30 ; 40 ; 60) à insérer dans un corps de valve, ladite valve comprenant le corps de valve et un élément d'étanchéité (34 ; 44 ; 64) ayant une surface d'étanchéité et saillant en direction radiale pour rendre étanche une ou plusieurs ouvertures de fluide réalisées dans le corps de valve, ledit élément d'étanchéité étant sensible à la pression du fluide et s'ouvrant et se fermant en vue de contrôler l'écoulement du fluide à travers les ouvertures de fluide, l'élément d'étanchéité étant pourvu d'au moins un évidement (37 ; 47 ; 67), l'évidement étant une gorge (37 ; 47 ; 67), formant de préférence une boucle essentiellement fermée, de telle sorte qu'au moins une extrémité d'étanchéité (35 ; 45 ; 65) est définie sur l'élément d'étanchéité qui s'étend entre l'évidement et la périphérie de l'élément d'étanchéité, laquelle extrémité d'étanchéité porte la surface d'étanchéité, l'évidement formant une zone flexible qui agit comme une articulation pour l'extrémité d'étanchéité, l'extrémité d'étanchéité comprenant une partie plus épaisse (38 ; 48 ; 68) adjacente à l'évidement, la hauteur (H) de la partie plus épaisse diminuant en direction de la périphérie de l'élément d'étanchéité et influençant la valeur de la pression d'ouverture de la valve de contrôle de fluide, la pression d'ouverture étant supérieure à zéro, **caractérisée en ce que** la gorge (37 ; 47 ; 67) est située sur la surface supérieure de l'élément d'étanchéité (34 ; 44 ; 64) opposée à la surface d'étanchéité.

2. Valve de contrôle de fluide selon la revendication 1, dans laquelle la forme de l'évidement (37 ; 47 ; 67) correspond sensiblement à la forme de la circonférence extérieure de l'élément d'étanchéité.

3. Valve de contrôle de fluide selon la revendication 1 ou 2, dans laquelle la gorge (37 ; 47 ; 67) a une forme sensiblement annulaire.

4. Valve de contrôle de fluide selon l'une ou plusieurs des revendications précédentes, dans laquelle l'élément d'étanchéité est pourvu d'au moins deux évidements qui sont formés comme des gorges s'étendant sur la surface de l'élément d'étanchéité à une distance mutuelle prédéterminée.

5. Valve de contrôle de fluide selon l'une ou plusieurs des revendications précédentes, dans laquelle l'élément d'étanchéité (34 ; 44 ; 64) a sensiblement la forme d'un disque.
